# FASCICULE DE BREVET EUROPEEN

(11) **EP 0 949 111 B1**
(45) Date de publication et mention de la délivrance du brevet: **17.03.2004**
(21) Numéro de dépôt: 99400816.7
(22) Date de dépôt: 02.04.1999
(51) Int. Cl.: B60N 2/00, B60N 2/08

(54) **Système d'arrimage modulable à commande par cames**
Modulares Befestigungssystem mit Nockensteuerung
Modular anchoring system with cam control

(30) Priorité: 06.04.1998 FR 9804244
(43) Date de publication de la demande: 13.10.1999
(73) Titulaire: Renault s.a.s., 92100 Boulogne Billancourt (FR)
(72) Inventeur: Amerigo, Marc, 31400 Toulouse (FR); Girardi, Philippe, 95410 Groslay (FR)

(56) Documents cités:
- DE-A- 19 520 959
- DE-U- 29 803 620
- US-A- 5 236 153

## Description

L'invention propose un système pour le réglage de la position longitudinale, et le blocage en position réglée, d'un sous ensemble, notamment d'un siège, sur le plancher horizontal de l'habitacle d'un véhicule automobile.

Selon une conception connue, il a déjà été proposé d'aménager des séries de points d'accrochage sur le plancher du véhicule dont chacune, comportant de préférence quatre points d'accrochage pour les quatre pieds du siège ou du sous-ensemble, détermine une position de montage et de fixation.

Afin d'accroître la modularité de l'aménagement de l'habitacle, il a déjà été proposé un système qui est par exemple décrit et représenté dans le document US-A-5.236.153, dans lequel le plancher horizontal de l'habitacle d'un aéroplane est équipé d'au moins deux rails ou glissières parallèles qui reçoivent en coulissement longitudinal des organes qui guident des déplacements longitudinaux d'un siège et qui permettent d'assurer un verrouillage en position longitudinale réglée et un verrouillage vertical ou une extraction du siège pour l'insérer ou l'extraire de la glissière, le siège comportant des pieds d'orientation sensiblement verticale dont les extrémités inférieures comportent des moyens, expansibles transversalement, de guidage, et de verrouillage longitudinal et vertical.

Cette solution permet d'accroître la modularité de l'habitacle recevant les sièges.

Toutefois, cette conception fait appel à des moyens expansibles délicats à utiliser. En effet, chaque extrémité de pied de siège comporte deux pênes d'orientation sensiblement longitudinale, articulés autour d'un pivot d'axe longitudinal mobile verticalement, pour déplacer sélectivement des extrémités supérieures et inférieures des pênes de sorte qu'elles coopèrent sélectivement avec des zones respectivement supérieures et inférieures de la glissière associée, de façon à assurer des fonctions de guidage, verrouillage ou déverrouillage longitudinal par coincement, et de verrouillage vertical ou extraction par coincement ou relâchement.

Dans ce système, le pivot d'articulation des pênes est animé d'un mouvement de translation verticale qu'il transforme en un mouvement de rotation des pênes suivant l'axe de la glissière. Ce mouvement de translation verticale est obtenu par déplacement vertical du pivot, constitué d'une bille formant écrou, le long du filetage d'une vis lié à un bâti du dit système, et dont le vissage ou le dévissage provoque sélectivement l'écartement ou le rapprochement des pênes, et par voie de conséquence l'immobilisation du pied par rapport à la glissière.

Dans le contexte d'un véhicule automobile pour lequel la modularité des éléments va de pair avec la rapidité de manipulation, un tel système vis-écrou est inapproprié.

De plus, si cette conception permet une grande modularité d'un habitacle d'aéroplane, elle ne peut en revanche être appliquée à un habitacle d'automobile pour lequel les impératifs d'immobilisation des sièges sont beaucoup plus draconiens.

En effet, en cas de décélération brutale ou de choc, les sièges doivent rester rigoureusement immobiles par rapport à leurs glissières, pour éviter que les passagers ne soient projetés dans l'habitacle. L'éventualité d'un choc, absente dans le cas d'un aéroplane, interdit donc l'emploi de procédés de verrouillage longitudinal par coincement.

Le siège ayant des dimensions verticales importantes, son système de fixation doit être conçu de façon à pouvoir résister à un arrachement non uniforme des pieds. Si, pour une raison quelconque, un pied est arraché, un couple est appliqué aux autres pieds et l'ensemble de la fixation du siège est fragilisée. En cas de choc, le siège formant bras de levier, les accélérations longitudinales du siège et du passager exercent un couple d'axe transversal sur les fixations du siège, qui risque de provoquer une rupture des fixations du siège dans le cas ou les moyens de guidage et de verrouillage du siège se situent dans un même plan horizontal.

Il est donc souhaitable de décaler verticalement les fonctions de guidage et de verrouillage du siège de façon à pouvoir opposer un couple résistant à un éventuel couple de rupture.

L'invention propose une nouvelle conception d'un système de réglage du type mentionné précédemment qui permet de remédier aux inconvénients précités.

Pour décaler verticalement les fonctions de guidage et de verrouillage du siège de façon à pouvoir opposer un couple résistant à un éventuel couple de rupture, et pour disposer de très grandes facilités de réglage et de modularité des sièges pour les passagers, l'invention propose plus particulièrement un système pour le réglage de la position longitudinale, et le blocage en position réglée d'un sous-ensemble, sur une structure d'un habitacle d'un véhicule automobile équipé d'au moins une glissière qui reçoit en coulissement longitudinal au moins un système de guidage des déplacements longitudinaux et de verrouillage longitudinal et vertical en position réglée d'un pied du sous-ensemble, dont l'extrémité reçue dans la glissière est équipée d'un mécanisme expansible mobile commandé entre
. une première position extrême, dite d'engagement ou de dégagement vertical, dans laquelle deux organes de verrouillage du mécanisme expansible, à action symétrique et opposée par rapport à un plan médian vertical de la glissière, sont dans une position escamotée vers l'intérieur dans laquelle leur encombrement transversal permet l'introduction ou l'extraction verticale du mécanisme à travers une fente longitudinale médiane de la glissière délimitée par deux bords supérieurs longitudinaux (définis ailes dans la suite) et parallèles de la glissière ; et
. une seconde position extrême, dite de verrouillage, dans laquelle les deux organes s'étendent chacun transversalement en regard de deux faces intérieures des ailes supérieures de la glissière avec lesquelles ils coopèrent par accrochage, pour immobiliser le pied par rapport à la glissière longitudinalement et verticalement ;
. en passant par au moins une position intermédiaire, dite de réglage, dans laquelle les deux organes s'étendent chacun transversalement en regard des deux faces intérieures des ailes supérieures de la glissière, pour retenir verticalement le pied par rapport à la glissière et permettre des déplacements longitudinaux du pied à l'intérieur de la glissière, et du type dans lequel les deux organes de verrouillage du mécanisme sont montés articulés autour d'un axe longitudinal sur un premier coulisseau monté mobile verticalement par rapport au pied pour déplacer verticalement les organes, et sont commandés pour modifier leur encombrement transversal par le déplacement vertical d'un deuxième coulisseau qui est monté mobile verticalement par rapport au premier coulisseau et qui est solidaire d'une tige, de direction longitudinale, qui est reçue dans des lumières de commande des organes articulés pour, en se rapprochant ou en s'éloignant verticalement de l'axe longitudinal d'articulation des organes, provoquer leur pivotement dans les deux sens.

Pour simplifier la commande du système, l'invention propose un système du type précédemment décrit et connu, par exemple, dudit US-A-5 236 153, caractérisé en ce que les déplacements verticaux des deux coulisseaux sont commandés par la rotation d'un arbre de commande d'orientation transversale, porté par le pied, qui porte et entraîne en rotation une première et une deuxième came de formes appropriées, qui coopèrent en appui sur des portées respectivement solidaires du premier et du deuxième coulisseau.

Selon d'autres caractéristiques de l'invention :
- le deuxième coulisseau est rappelé élastiquement vers une position basse par rapport au premier coulisseau ;
- le pied comporte au moins un palier recevant l'arbre de commande qui s'étend suivant un axe transversal par rapport à la glissière, et qui est susceptible d'occuper trois positions angulaires déterminées et consécutives dans un sens déterminé ;
- les deux premières positions angulaires correspondent à deux positions extrêmes de la première came suivant une levée de came vers le haut et une levée de came vers le bas, et la troisième position angulaire correspond à une position extrême de la deuxième came suivant une levée de came vers le haut, telles que :
   . la première came est en appui sur la plaque d'appui du premier coulisseau suivant la première position angulaire de l'arbre, correspondant à un appui sur une partie supérieure de la plaque d'appui solidaire du premier coulisseau , et correspondant à une position haute du premier coulisseau permettant le blocage longitudinal et vertical du système dans la glissière ;
   . la première came est en appui sur la plaque d'appui du premier coulisseau suivant la deuxième position angulaire de l'arbre, correspondant à un appui sur une partie inférieure de la plaque d'appui solidaire du premier coulisseau, et correspondant à une position basse du premier coulisseau permettant le réglage longitudinal du système dans la glissière ; et
   . la deuxième came est en appui sous la plaque transversale du deuxième coulisseau suivant la troisième position angulaire de l'arbre, correspondant à une position haute du deuxième coulisseau par rapport au premier coulisseau pour permettre l'escamotage transversal des organes, le premier coulisseau étant en position basse ;
- le système comporte un troisième coulisseau, monté mobile verticalement par rapport au pied, qui comporte une patte d'appui qui coopère avec la glissière, à l'encontre de l'action d'un ressort qui rappelle élastiquement vers le bas lorsque le pied quitte la glissière, un ergot complémentaire porté par le troisième coulisseau au contact d'une encoche de l'arbre pour bloquer l'arbre de commande dans la troisième position angulaire correspondant à l'escamotage transversal des organes ;
- le premier coulisseau comporte deux faces de guidage verticales parallèles et symétriques par rapport à un plan vertical médian du pied, transversal à la glissière, qui sont guidés en coulissement dans un corps du pied de forme complémentaire, et le deuxième coulisseau comporte deux faces de guidage verticales parallèles et symétriques par rapport au plan médian du premier coulisseau, et qui sont guidées en coulissement dans un corps du premier coulisseau de forme complémentaire ;
- les organes de verrouillage comportent des lumières en arc de cercle non centrées autour de leur axe d'articulation, qui déterminent une course verticale de la tige, portée par le deuxième coulisseau et reçue dans les lumières, de sorte que la course de la tige est égale à la course du deuxième coulisseau ;
- les organes des verrouillages sont des peignes dont des parties actives sont reçues entre des dents transversales d'une crémaillère longitudinale portées par les faces intérieures des ailes supérieures de la glissière ;
- en variante, la glissière comporte une crémaillère comportant des plaques évidées à intervalles réguliers, et de forme complémentaire de crochets portés par les parties actives des peignes pour resserrer transversalement vers l'intérieur les parois latérales de la glissière lorsque le pied est soumis à un effort d'arrachement ;
- le pied peut glisser sur les ailes supérieures de la glissière en s'appuyant par l'intermédiaire de deux patins symétriques portés par le pied, et réalisés en matériau à faible coefficient de frottement.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective éclatée des composants d'un exemple de réalisation d'un système réalisé suivant l'invention ;
- la figure 2 est une vue en perspective du système de la figure 1 qui est illustré en position assemblée et verrouillée ;
- la figure 3 est une vue de face suivant une direction transversale de la figure 2 qui illustre le mécanisme de verrouillage ;
- la figure 4A est une vue en coupe par le plan médian P' vertical et transversal de la figure 2 du système en position de verrouillage ;
- la figure 5A est une vue de face selon la figure 3 de la position de la came correspondant à la position de verrouillage selon la figure 4A ;

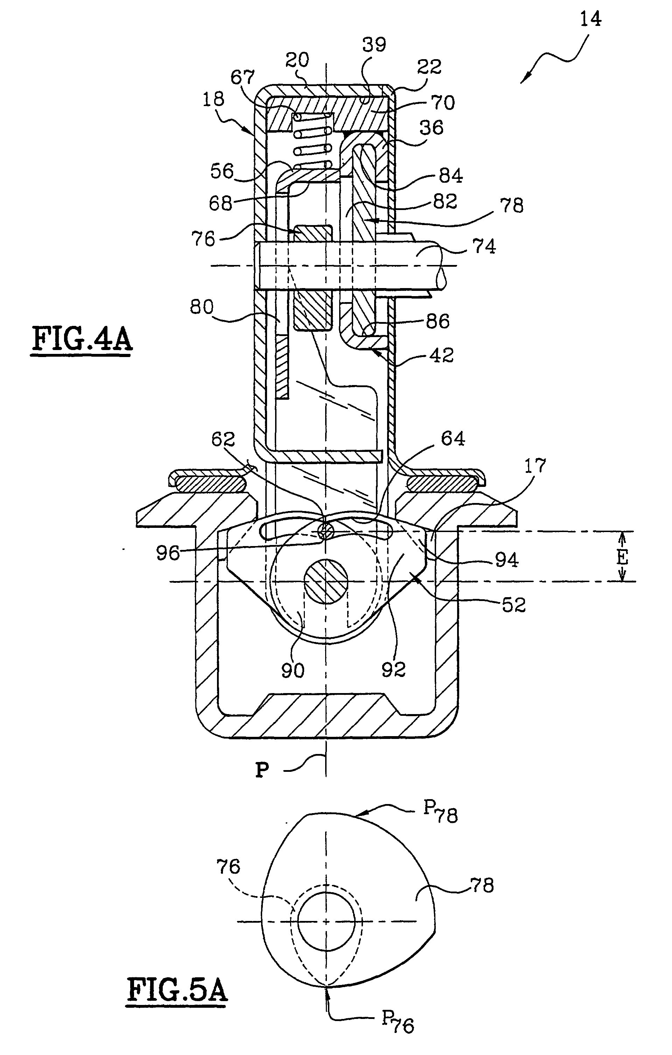

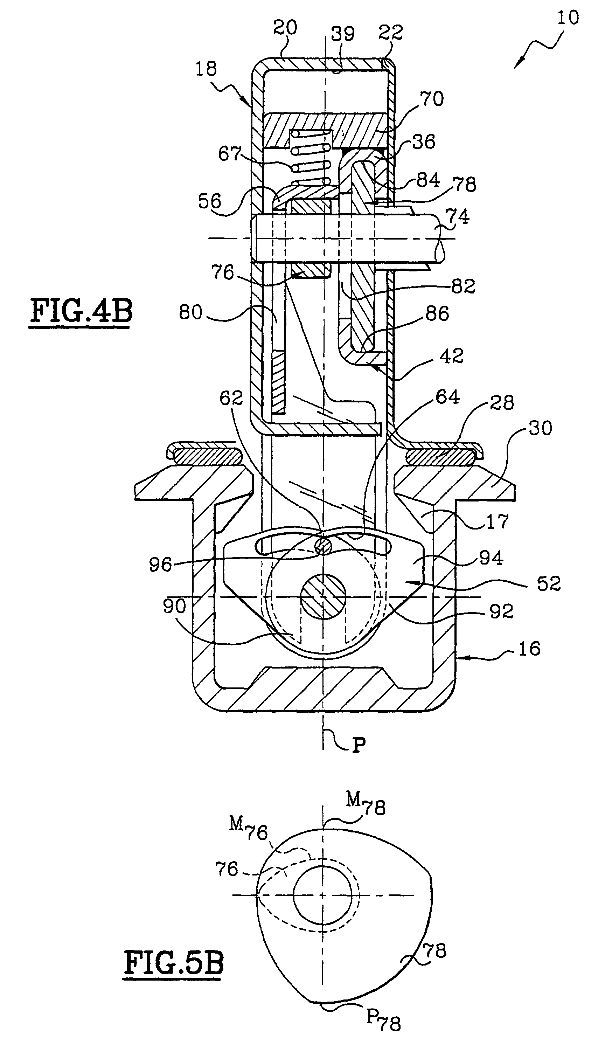

- Les figures 4B et 5B sont des vues similaires à celles des figures 4A et 5A qui illustrent le système en position de réglage ;

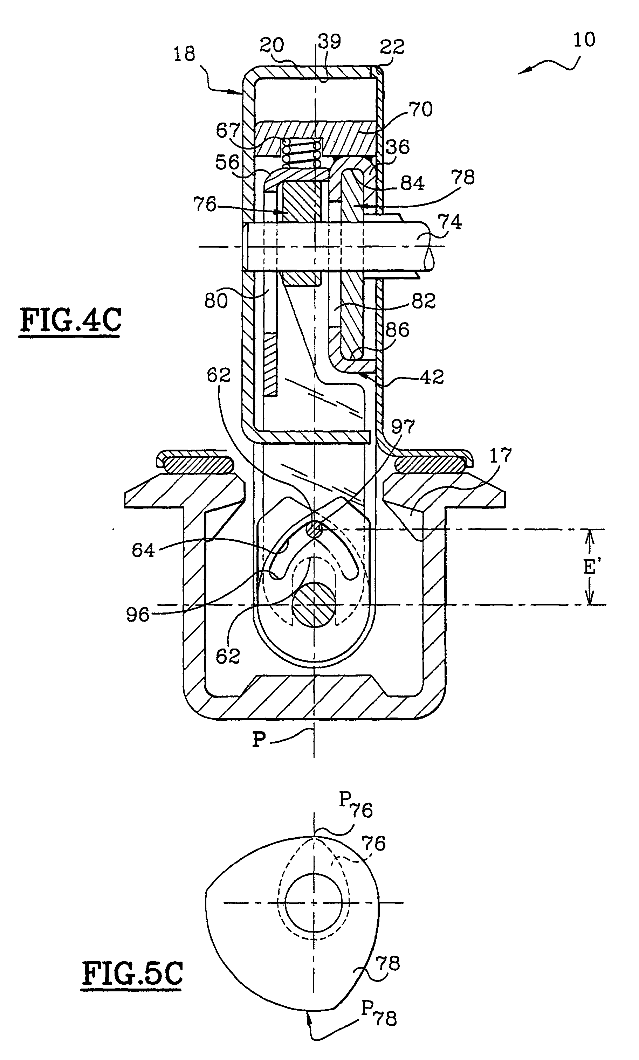

- Les figures 4C et 5C sont des vues similaires à celles des figures 4A et 5A qui illustrent le système en position d'engagement ;

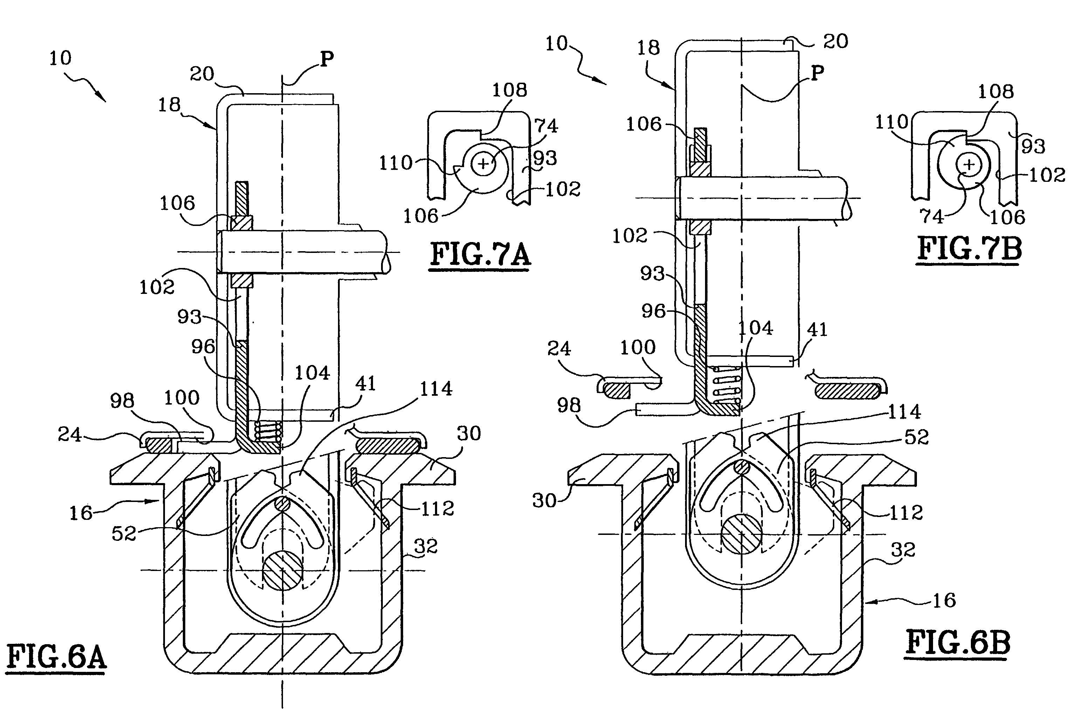

- la figure 6A est une vue en coupe partielle similaire à celle de la figure 4Cqui illustre une variante présentant un système de retenue transversale des organes en position engagée ;
- la figure 7A est une vue de face de la position de l'ergot du système de retenue par rapport à l'encoche de l'arbre à cames correspondant à la figure 6A ; et
- les figures 6B et 7B sont des vues similaires aux figures 6A et 7A présentant le système de retenue transversale des organes en position dégagée.

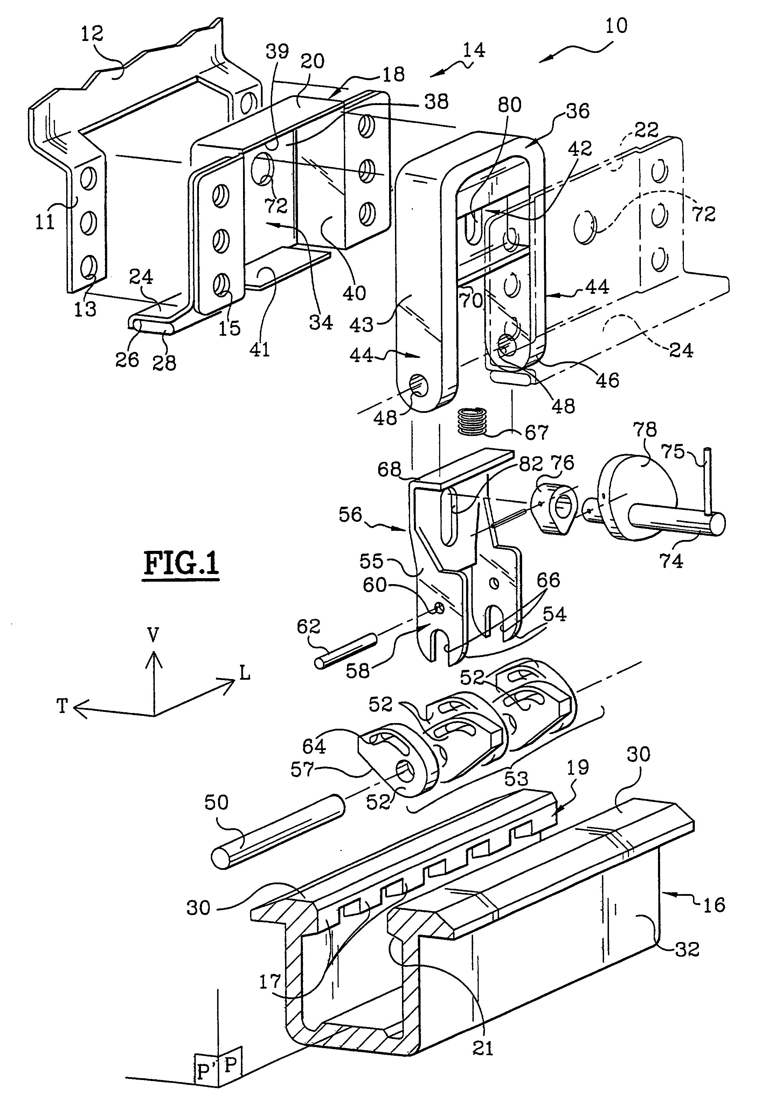

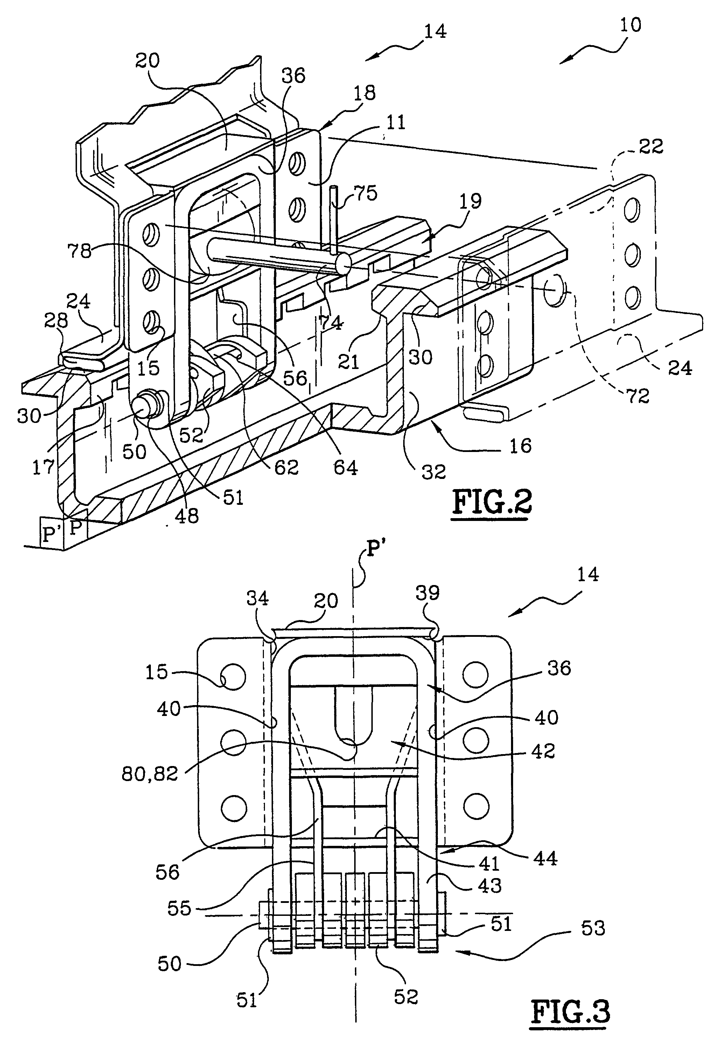

En référence à la vue la figure 1, on désignera dans la description qui va suivre, et avec un sens identique, par le terme de direction verticale, la direction matérialisée par la flèche V, par le terme de direction longitudinale, la direction matérialisée par la flèche L, par le terme de direction transversale la direction matérialisée par la flèche T, par le terme de plan longitudinal, le plan matérialisé par le plan P, et par le terme de plan transversal, le plan matérialisé par le plan P'.

Sur la figure 1, on voit un système d'arrimage modulable 10 à commande par cames réalisé suivant l'invention.

De manière connue, le système 10 comporte une platine 12 de fixation à un élément d'aménagement intérieur du véhicule tel qu'un siège, une tablette ou un quelconque élément d'aménagement intérieur (non représentés).

Le système 10 comporte un pied 14 du sous-ensemble, fixé sur la platine 12 par des vis (non représentées) traversant des trous 13 d'une plaque 11 de fixation longitudinale et verticale de la platine 12 et des trous 15 du pied 14, représentés aussi aux figures 2 et 3 .

Le pied 14 est destiné à être reçu, comme on le voit aussi à la figure 2, dans une glissière 16 qui est fixée à un plancher (non représenté) du véhicule. Avantageusement, la glissière 16 est réalisée à partir d'un profilé, par exemple une barre étirée ou emboutie.

Le pied 14 comporte un corps 18, qui peut être avantageusement réalisé en tôle pliée et soudée, de forme sensiblement parallélépipédique, et formé d'une part d'un boîtier 20, destiné à recevoir un mécanisme de verrouillage décrit ultérieurement, et d'autre part d'un couvercle 22 permettant de fermer le corps de pied 18 après montage du mécanisme dans le corps 18.

Le couvercle 22 est représenté aux figures 1 et 2 en vue fantôme. Le boîtier 20 et le couvercle 22 comportent des ailes inférieures 24, symétriques par rapport à un plan vertical longitudinal médian P de la glissière 16, qui s'étendent transversalement et horizontalement et comportent sur leur faces inférieures 26 des patins 28, réalisés en matériau à faible coefficient de frottement, destinés, comme on le voit aussi à la figure 2, à permettre l'appui du pied 18 sur deux ailes supérieures 30 de la glissière 16, qui s'étendent horizontalement et transversalement vers l'extérieur, et en partie vers l'intérieur, à partir des bords d'extrémités supérieure de faces latérales 32 de la glissière 16.

Avantageusement, les patins en matériau à faible coefficient de frottement 28 sont portés par le corps 18, ce qui permet de réduire leur longueur à la dimension longitudinale du corps 18, permettant ainsi d'abaisser sensiblement les coûts de fabrication par opposition à une conception où les patins 28 s'étendraient longitudinalement sur toute la longueur des ailes supérieures 30 de la glissière 16.

Comme on le voit sur la figure 1, le boîtier 20 du pied 18 reçoit en coulissement vertical, dans un logement parallélépipédique 34, un premier coulisseau 36 dont les dimensions longitudinales et transversales sont telles que, lorsque le couvercle 22 referme le boîtier 20 du pied 18, le coulisseau 36 est guidé dans ses déplacements verticaux d'une part par une face longitudinale 38 du boîtier 20 et par le couvercle 22 et, d'autre part par appui de deux de ses faces verticales transversales 43 sur deux faces transversales 40 du boîtier 20, représentées à la figure 3. Ainsi, le coulisseau 36 ne peut se déplacer que dans la direction verticale par rapport au pied 18, entre deux positions extrêmes définies par une face supérieure horizontale 39 du boîtier 20 et une patte inférieure horizontale 41 du boîtier 20.

Le coulisseau 36 présente sensiblement la forme d'un U rectangulaire à l'envers, qui reçoit dans une partie intérieure et supérieure comprise entre ses branches verticales et parallèles 44 une plaque d'appui 42 soudée au coulisseau 36, représentée de face à la figure 3 et décrite ultérieurement en référence à la figure 4A. Le coulisseau 36 comporte, aux extrémités inférieures 46 des branches 44 du U, deux perçages longitudinaux et coaxiaux 48, d'axe longitudinal médian situé dans le plan P de la glissière 16. Les perçages longitudinaux 48 sont destinés à recevoir un axe longitudinal 50 sur lequel sont enfilés cinq organes de verrouillage 52 reçus longitudinalement entre les branches 44 du U et pouvant pivoter librement autour dudit axe 50, en occupant par exemple une position angulaire assemblée verrouillée, visible à la figure 2. L'alignement des organes de verrouillages en association avec les moyens de commande forme deux peignes 53, représentés à la figure 1, comportant respectivement deux et trois organes.

En variante (non représentée), les peignes 53 peuvent être réalisés chacun d'une seule pièce par moulage, forgeage, et/ou usinage.

La glissière 16 comporte dans une direction longitudinale des dents 17 qui s'étendent transversalement à l'intérieur sur des faces intérieures 21 de ses ailes supérieures 30, en formant sur la longueur de la glissière 16 une crémaillère 19, et qui sont destinées à recevoir les parties supérieures des organes de verrouillage 52 des peignes 53.

Comme l'illustrent les figures 1 et 3, le premier coulisseau 36 reçoit entre ses branches 44 un deuxième coulisseau 56, susceptible de coulisser verticalement dans le premier coulisseau par appui de deux faces de guidage 55 verticales transversales entre les branches 44 du premier coulisseau 36.

Avantageusement, le premier coulisseau 36 et le second coulisseau 56 sont réalisés en tôle pliée et soudée ou sont des pièces moulées, ce qui permet de réduire considérablement les coûts de fabrication.

Le deuxième coulisseau 56 comporte lui aussi à son extrémité inférieure deux pattes transversales verticales 58, portant avantageusement les faces de guidage 55, qui sont percées longitudinalement de trous de passage 60 d'une tige longitudinale 62, destinée à traverser des lumières curvilignes 64 des organes 52 précités.

Les pattes transversales 58 sont aussi percées des trous oblongs 66, qui débouchent verticalement aux extrémités inférieures 54 des pattes 58 du coulisseau 56, et dont le diamètre correspond à celui de l'axe longitudinal 50 qui reçoit les organes de verrouillage 52 des peignes 53, de sorte que le deuxième coulisseau 56 est guidé verticalement d'une part par les pattes 44 du premier coulisseau 36, et d'autre part par l'axe 50 sur lequel les pattes 58 sont guidées en coulissement par l'intermédiaire des trous oblongs 66.

Le second coulisseau 56 est rappelé élastiquement vers le bas par rapport au premier coulisseau 36 par l'intermédiaire d'un ressort 67 prenant appui d'une part sur une plaque transversale horizontale 68 située à l'extrémité supérieure du second coulisseau 56 et, d'autre part, sous une plaque transversale horizontale supérieure 70 située à l'extrémité supérieure de la plaque d'appui 42 du premier coulisseau 36.

Le corps de pied 18 comporte sur la face longitudinale 34 du boîtier 20 et sur le couvercle 22 deux paliers coaxiaux transversaux 72 d'un arbre de commande 74 qui traverse le corps 18 et le couvercle 22 du pied 14, et qui porte deux cames 76 et 78 liées en rotation à l'arbre 74 pour commander les mouvements des deux coulisseaux 36 et 56, et qui seront décrites ultérieurement.

L'arbre de commande 74 comporte, à son extrémité située du côté du couvercle 22, une tige de manoeuvre 75 pour permettre à un utilisateur de l'entraîner en rotation dans les deux sens.

A l'intérieur du pied 14, l'arbre de commande 74 traverse un trou oblong vertical 80 du premier coulisseau 36 et un trou oblong vertical 82 du second coulisseau 56, qui sont confondus sur la vue de la figure 3. La deuxième came 76 est destinée à agir sur le second coulisseau 56 par appui sous la face inférieure de sa plaque transversale 68, et la première came 78 est destinée à agir sur le premier coulisseau 36 par l'intermédiaire de la plaque d'appui 42 en coopérant avec des surfaces d'appui horizontales et transversales 84 et 86 qui sont illustrées à la figure 4A. Le coulisseau 56 est monté dans le coulisseau 36, lequel coulisseau 36 est monté dans le corps 18.

La figure 2 représente le système 10 en position assemblée de verrouillage.

Le couvercle 22 précédemment décrit apparaissant en vue fantôme, le deuxième coulisseau 56 est reçu dans le logement parallélépipédique 34 du boîtier 20 entre la face longitudinale 38 du boîtier 20 et le couvercle 22 à l'intérieur du premier coulisseau 36 qui est lui-même reçu dans le boîtier 20. Les organes de verrouillage 52 des peignes 53 sont portés par l'axe longitudinal 50 qui est immobilisé dans ses déplacements transversaux par les trous longitudinaux 48 du premier coulisseau 36, et est immobilisé longitudinalement par des moyens de fixation 51 tels que des anneaux élastiques ou, en variante (non représentée), un système vis/écrou.

Les organes de verrouillage 52 des peignes 53 sont par ailleurs traversés par la tige longitudinale 62 qui occupe une position déterminée dans les lumières 64 des organes 52, de sorte que les parties supérieures des organes de verrouillage 52 des peignes 53 s'étendent transversalement vers l'extérieur dans la glissière 16 entre les dents 17 de la crémaillère 19. La position de la tige longitudinale 62 dans les lumières 64 sera décrite ultérieurement en référence aux figures 4A, 4B, et 4C.

La figure 4A représente le système 10 en position verrouillée. Dans cette position, et comme représenté à la figure 5A, la première came 78 est dans une position angulaire telle que sa surface de came de plus forte excentration, référencée P₇₈ sur la figure 5A, est tournée vers le haut en appui sur la face supérieure 84 de la plaque d'appui 42 du coulisseau 36 de sorte que le coulisseau 36 est en butée vers le haut sous la face supérieure horizontale 39 du boîtier 20.

Par ailleurs, la distance entre les surfaces d'appui supérieures 84 et inférieure 86 de la plaque d'appui 42 est égale au diamètre vertical de la came 78. Par conséquent la position du premier coulisseau 36 est définie de façon univoque et sans jeu. Il en est donc de même de la position verrouillée des organes 52.

La deuxième came 76 est quant à elle dans une position angulaire telle que sa surface de came de plus forte excentration P₇₆ est tournée vers le bas et n'agit pas sur la plaque transversale 68 du second coulisseau 56, lequel est par conséquent ramené par rapport au premier coulisseau 36 vers le bas à l'aide du ressort de rappel 67.

Les organes de verrouillage 52 des peignes 53 ont dans le plan transversal P' un profil en forme de goutte d'eau et sont enfilés sur l'axe 50 au voisinage de leur extrémité inférieure de plus fortes dimensions 90. Les organes de verrouillage 52 des peignes 53 sont disposés alternativement sur l'axe longitudinal 50, de sorte que deux organes consécutifs 52 coopèrent avec deux espaces opposés compris entre deux dents 17 de la crémaillère 19. Les organes 52 comportent à leur autre extrémité 92 des parties supérieures actives 94 qui sont reçues entre les dents 17 de la crémaillère 19. Dans ce mode de réalisation, les dents 17 de la crémaillère 19, vues dans le plan transversal P', présentent un profil sensiblement triangulaire de façon à favoriser l'extraction rapide des organes de verrouillage 52 des peignes 53 lorsque ceux-ci seront, comme on le décrira ultérieurement, amenés à s'escamoter.

En variante (non représentée), les dents 17 de la crémaillère 19 peuvent présenter un profil en forme de parallélogramme permettant une meilleure résistance aux efforts longitudinaux d'arrachement du pied 14.

Dans la configuration de la figure 4A, le coulisseau 56 est dans sa position basse de butée par rapport au coulisseau 36, de sorte que la tige longitudinale 62 est reçue en butée à l'extrémité 96 des lumières 64 des organes 52, laquelle extrémité 96 est opposée aux parties actives 94 desdits organes 52. Les lumières 64 sont sensiblement en arc de cercle et ne sont pas centrées sur l'axe 50. De cette manière, l'écart E entre la tige longitudinale 62 et l'axe longitudinal 50 est minimal et l'appui de la tige longitudinale 62 en butée au fond de l'extrémité 96 des lumières 64 maintient les organes 52 dans une position d'encombrement transversal maximale.

La figure 4B illustre la configuration du système 10 lorsqu'un utilisateur a effectué une rotation de l'arbre de commande 74, à l'aide du levier 75 suivant une rotation horaire d'un quart de tour en considérant les figures 5A et 5B. Dans cette configuration, la partie de plus grande excentration P₇₈ de la première came 78 est en appui sur la surface d'appui inférieure 86 de la plaque d'appui 42, de sorte que le premier coulisseau 36 occupe une position basse dans laquelle les parties actives 94 des organes de verrouillage 52 des peignes 53 ne sont plus reçues entre les dents 17, mais dégagées en dessous.

La partie de moindre excentration M₇₈ de la première came 78 est en appui sur la surface d'appui supérieure 84 de la plaque d'appui 42 de sorte qu'elle accompagne le mouvement du coulisseau 36 dans le pied 18 tout en empêchant le coulisseau 36 de remonter dans le pied 18. La position du coulisseau 36 par rapport au pied 18 est donc définie verticalement de façon univoque en position basse.

D'une façon analogue à celle décrite en référence à la figure 4A, la distance entre les surfaces d'appui supérieures 84 et inférieure 86 de la plaque d'appui 42 est, en position de réglage, égale au diamètre vertical de la came 78. Par conséquent l'encombrement transversal des organes 52 en position de réglage est définie transversalement sans jeu.

Par ailleurs, après cette rotation d'un quart de tour horaire, la deuxième came 76 est quant à elle dans une position angulaire dans laquelle elle affleure sous la plaque transversale 68 du second coulisseau 56 par l'intermédiaire de sa partie de moindre excentration M₇₆, le coulisseau 56 occupant par rapport au coulisseau 36 une position inférieure basse analogue à celle décrite en référence à la figure 4A.

Ainsi, les organes de verrouillage 52 des peignes 53 présentent un encombrement transversal maximal, tout en étant dégagés des dents 17 de la crémaillère 19, permettant ainsi le réglage longitudinal du système 10 dans la glissière 16. Cette position correspond à une position de réglage longitudinal, par exemple, lorsqu'un utilisateur souhaite régler la position longitudinale d'un siège ou d'un sous-ensemble d'aménagement intérieur du véhicule dans l'habitacle du véhicule. Le poids du siège ou du sous-ensemble de l'aménagement intérieur du véhicule plaque le pied 18 contre les ailes supérieures 30 de la glissière 16 par l'intermédiaire des patins 28 et le pied 18 ne peut donc se déplacer que longitudinalement.

Par ailleurs, l'encombrement transversal maximal des organes de verrouillage 52 des peignes 53 garantit avantageusement, dans le cas où un effort serait exercé verticalement vers le haut sur le pied 18, comme dans le cas d'un choc violent, que celui-ci ne quitte pas la glissière 16.

La figure 4C représente le système 10 en position d'engagement ou de dégagement vertical du pied 18. Dans cette configuration, après une seconde rotation horaire suivant un quart de tour horaire de l'arbre 74 depuis la position illustrée à la figure 5B, la première came 78 est dans une position angulaire telle que sa partie de plus forte excentration P₇₈ agit sur la face inférieure horizontale 86 d'une façon analogue à celle décrite en référence à la figure 4B. La partie de plus forte excentration P₇₈ est donc en appui sur la face inférieure 86 de la plaque d'appui 42 du premier coulisseau 36.

Comme on peut le voir sur la figure 5C, la rotation d'un quart de tour dans le sens horaire de la l'arbre 74 ayant entraîné la rotation d'une valeur angulaire égale de la deuxième came 76, celle-ci est en appui sur la plaque transversale 68 du second coulisseau 56 dans sa partie de plus forte excentration P₇₆. De cette manière, le second coulisseau 56 remonte par rapport au premier coulisseau 36 en comprimant le ressort de rappel 67, ce qui conduit à un écartement E' entre la tige longitudinale 62 et l'axe longitudinal 50 des organes de verrouillage 52 des peignes 53 supérieur à l'écartement E décrit en référence aux figures 4A et 4B.

Par suite, la tige longitudinale 62 a glissé à l'intérieur des lumières 64 pratiquées dans les organes de verrouillage 52 des peignes 53 pour atteindre une position de butée 97, qui est à l'opposé de la précédente position 96 dans les lumières 64. Le glissement en appui de la tige longitudinale 62 dans les lumières 64 des organes 52 lors de la rotation de l'arbre 74 provoque la rétraction transversale vers l'intérieur des organes 52, et le pied 18 n'est plus alors qu'en appui sur la glissière 16. Le pied 18 peut alors être extrait de la glissière 16. La remontée du second coulisseau 56 est parfaitement assurée à l'intérieur du pied 18 par l'intermédiaire de la coopération entre les trous oblongs 54 qui reçoivent l'axe longitudinal 50 solidaire du premier coulisseau 36, les coulisseaux étant de plus guidés sur l'arbre 74 par les trous oblongs 80 et 82.

D'une façon analogue aux positions précédentes, la distance entre les surfaces d'appui supérieures 84 et inférieure 86 de la plaque d'appui 42 est égale au diamètre vertical de la came 78 en position d'engagement ou de dégagement. Par conséquent la position d'encombrement transversal minimal des organes 52 est sans jeu, ce qui améliore les conditions d'engagement ou de dégagement du pied 18 par rapport à la glissière 16.

De plus, comme on le voit sur la figure 4C, la partie de plus forte excentration P₇₆ de la came 76 occupe une portion angulaire très faible de la came 76, ce qui a pour conséquence un équilibre instable de la came 76 sur la plaque transversale 68 du second coulisseau 56. De plus, pour la même position angulaire de l'axe 74, la pente du profil de la came 78 est plus forte du coté droit de la partie de plus forte excentration P₇₆ de la came 76. Aussi, dès que l'utilisateur a relâché l'arbre 74, l'effort antagoniste du ressort 67 tend à entraîner l'arbre 74 en rotation dans le sens anti-horaire, contraire au précédent, et les organes 52 sont ramenés dans leur position de d'encombrement transversal maximal.

En variante (non représentée), l'axe de commande 74 peut être rappelé en rotation dans un sens antihoraire par un ressort spiral lié au boîtier 20 et lié en rotation à l'axe de commande 74 de façon à ce que sa position de repos corresponde à la position verrouillée du pied 18 dans la glissière 16.

La réintroduction du pied 18 dans la glissière 16 est facilitée par des tranches inférieures 57 des organes 52, visibles à la figure 1, qui , lorsque les organes 52 sont amenés au contact des ailes 30 de la glissière 16, provoquent la rétraction transversale des organes 52, le ressort de rappel 67 provoquant aussitôt après, par sécurité, l'écartement des organes 52 en position d'encombrement transversal maximal.

Avantageusement, cette position correspond à une utilisation en engagement ou en dégagement du système 10 dans la glissière 16 liée au véhicule. Cette position permet par exemple d'enlever ou de rajouter un sous-ensemble tel que précédemment décrit en référence à la figure 1 de façon à pouvoir utiliser l'habitacle du véhicule concerné avec une grande modularité.

Les figures 6A, 6B, 7A, et 7B illustrent un mode de réalisation en variante du système 10 tel que précédemment décrit. Par rapport au système 10 précédemment décrit, le corps 18 comporte un troisième coulisseau 93 de blocage de l'arbre de commande 74 destiné à maintenir les organes de verrouillage 52 des peignes 53 en position escamotée ou rétractée de dégagement lorsque le pied 14 est extrait verticalement de la glissière 16.

Le coulisseau de blocage 93 est mobile verticalement entre les parois du boîtier 20 et le premier coulisseau 36 (non représenté sur les figures 6A, 6B). Le coulisseau de blocage 93 de l'arbre de commande 74 comporte une patte transversale inférieure 98 qui, lorsque le corps 18 est en appui sur la glissière 16, est reçue dans un logement 100 pratiqué transversalement dans l'aile inférieure 24 du boîtier 20.

Dans une partie supérieure, le coulisseau 93 de blocage de l'arbre de commande 74 comporte un évidement 102 permettant le passage de l'arbre de commande 74. Dans la position dans laquelle le pied 14 est en appui sur la glissière 16, une seconde patte transversale 104, tournée vers l'intérieur de la glissière 16 et située à l'extrémité inférieure du coulisseau 93 comprime un ressort de rappel 96 du coulisseau 93 contre la patte inférieure horizontale 41 du boîtier 20.

Comme illustré en référence à la figure 7B, l'arbre de commande 74 comporte, dans le plan longitudinal vertical du coulisseau de blocage 93, une troisième came 106.

Lorsqu'un utilisateur extrait le sous-ensemble décrit en référence à la figure 1, de la glissière 16 et extrait le pied 14 de la glissière 16, la patte 98 quitte le logement 100 et le ressort de rappel 96 rappelle le coulisseau 93 vers le bas. L'évidement 102 comporte un profil d'ergot destiné à coopérer avec la came 106 de l'arbre 74 de sorte que, lorsque le coulisseau 93 de blocage de l'arbre de commande 74 est rappelé vers le bas dans une position de butée par le ressort de rappel 96, un ergot 108 appartenant au coulisseau 93 vient au contact d'une encoche 110 porté par la came 106 solidaire de l'arbre de commande 74 pour et empêcher sa rotation dans le sens horaire. De cette manière, comme représenté aux figures 6B et 7B l'arbre de commande 74 est immobilisé en rotation tant que la patte 98 du coulisseau 94 de blocage de l'arbre de commande n'est pas de nouveau en appui sur les ailes transversales 30 de la glissière 16, prévenant ainsi tout risque d'expansion transversale vers l'extérieur des organes 52 lorsque le pied 14 n'est pas inséré dans la glissière 16, comme illustré à la figure 6B.

Les figures 6A et 6B illustrent par ailleurs un mode de réalisation en variante de la glissière 16. La crémaillère 19 de la glissière 16 est réalisée par deux plaques 112, évidées à intervalles réguliers, et disposées selon la direction longitudinale de la glissière 16 et inclinées d'un angle similaire à celui des dents 17 décrites en référence aux figures précédentes, pour coopérer avec des extrémités en crochet 114 situées aux extrémités des parties actives 94 des organes 52. Dans cette configuration, les dents 17 de la crémaillère sont constituées par les zones de matière comprises entre deux évidements des plaques 112. De cette manière, lorsque les organes 52 sont dans une position d'encombrement transversal maximal, les extrémités en crochet 114 sont reçues dans les plaques évidées 112 de sorte qu'un effort d'arrachement vertical transmis au pied 18 transmet aux organes 52 une résultante qui tend à rapprocher les parois latérales 32 de la glissière 16, garantissant ainsi une parfaite tenue verticale du système 10 en cas de choc.

## Revendications

1. Système (10) pour le réglage de la position longitudinale, et le blocage en position réglée d'un sous-ensemble, sur une structure d'un habitacle d'un véhicule automobile équipé d'au moins une glissière (16) qui reçoit en coulissement longitudinal au moins un système de guidage des déplacements longitudinaux et de verrouillage longitudinal et vertical en position réglée d'un pied (14) du sous-ensemble, dont l'extrémité reçue dans la glissière (16) est équipée d'un mécanisme expansible mobile commandé entre
. une première position extrême, dite d'engagement ou de dégagement vertical, dans laquelle deux organes (52) de verrouillage du mécanisme expansible, à action symétrique et opposée par rapport à un plan médian vertical (P) de la glissière (16), sont dans une position escamotée vers l'intérieur dans laquelle leur encombrement transversal permet l'introduction ou l'extraction verticale du mécanisme à travers une fente longitudinale médiane de la glissière (16) délimitée par deux ailes (30) supérieures longitudinales et parallèles de la glissière (16); et
. une seconde position extrême, dite de verrouillage, dans laquelle les deux organes (52) s'étendent chacun transversalement en regard de deux faces intérieures (21) des ailes supérieures (30) de la glissière (16) avec lesquelles ils coopèrent par accrochage, pour immobiliser le pied (14) par rapport à la glissière (16) longitudinalement et verticalement ;
. en passant par au moins une position intermédiaire, dite de réglage, dans laquelle les deux organes (52) s'étendent chacun transversalement en regard des deux faces intérieures (21) des bords supérieurs de la glissière, pour retenir verticalement le pied (14) par rapport à la glissière (16) et permettre des déplacements longitudinaux du pied (14) à l'intérieur de la glissière (16),
et du type dans lequel les deux organes (52) de verrouillage du mécanisme sont montés articulés autour d'un axe longitudinal (50) sur un premier coulisseau (36) monté mobile verticalement par rapport au pied (14) pour déplacer verticalement les organes (52) , et sont commandés pour modifier leur encombrement transversal par le déplacement vertical d'un deuxième coulisseau (56) qui est monté mobile verticalement par rapport au premier coulisseau (36) et qui est solidaire d'une tige (62), de direction longitudinale (L), qui est reçue dans des lumières (64) de commande des organes (52) articulés pour, en se rapprochant ou en s'éloignant verticalement de l'axe (50) longitudinal d'articulation des organes, provoquer leur pivotement dans les deux sens,
**caractérisé en ce que** les déplacements verticaux des deux coulisseaux (36, 56) sont commandés par la rotation d'un arbre de commande (74) d'orientation transversale (T), porté par le pied (14), qui porte et entraîne en rotation une première (78) et une deuxième (76) came de formes appropriées, qui coopèrent en appui sur une plaque d'appui (42) et une plaque transversale (68) respectivement solidaires du premier (36) et du deuxième (56) coulisseau.

2. Système suivant la revendication 1, **caractérisé en ce que** le deuxième coulisseau (56) est rappelé élastiquement vers une position basse par rapport au premier coulisseau (36).

3. Système suivant la revendication 2, **caractérisé en ce que** le pied (14) comporte au moins un palier (72) recevant l'arbre de commande (74) qui s'étend suivant un axe transversal (T) par rapport à la glissière (16), et qui est susceptible d'occuper trois positions angulaires déterminées et consécutives dans un sens déterminé.

4. Système suivant la revendication 3, **caractérisé en ce que** les deux premières positions angulaires correspondent à deux positions extrêmes (P_{78,} M₇₈) de la première came (78) suivant une levée de came vers le haut et une levée de came vers le bas, et **en ce que** la troisième position angulaire correspond à une position extrême (P₇₆) de la deuxième came (76) suivant une levée de came vers le haut, telles que :
. la première came (78) est en appui sur la plaque d'appui (42) du premier coulisseau (36) suivant la première position angulaire de l'arbre, correspondant à un appui sur une partie supérieure (84) de la plaque d'appui solidaire du premier coulisseau (36), et correspondant à une position haute du premier coulisseau (36) permettant le blocage longitudinal et vertical du système (10) dans la glissière (16) ;
. la première came (78) est en appui sur la plaque d'appui (42) du premier coulisseau (36) suivant la deuxième position angulaire de l'arbre (74), correspondant à un appui sur une partie inférieure (86) de la plaque d'appui (42) solidaire du premier coulisseau (36), et correspondant à une position basse du premier coulisseau (36) permettant le réglage longitudinal du système (10) dans la glissière (16) ; et
. la deuxième came (76) est en appui sous la plaque transversale (68) du deuxième coulisseau (56) suivant la troisième position angulaire de l'arbre (74), correspondant à une position haute du deuxième coulisseau (56) par rapport au premier coulisseau (36) pour permettre l'escamotage transversal des organes (52), le premier coulisseau (36) étant en position basse.

5. Système selon la revendication 4, **caractérisé en ce qu'**il comporte un troisième coulisseau (93), monté mobile verticalement par rapport au pied (14), qui comporte une patte transversale inférieure (98) qui coopère avec la glissière (16), à l'encontre de l'action d'un ressort (96) qui rappelle élastiquement vers le bas lorsque le pied (14) quitte la glissière (16), un ergot complémentaire (108) porté par le troisième coulisseau au contact d'une encoche (110) de l'arbre pour bloquer l'arbre de commande (74) dans la troisième position angulaire correspondant à l'escamotage transversal des organes (52).

6. Système selon l'une quelconque des revendications précédentes, **caractérisé en ce que** le premier coulisseau (36) comporte au moins deux faces (43) de guidage verticales parallèles par rapport à un plan vertical du pied (14), qui sont guidées en coulissement dans un boîtier (20) du pied (18) de forme complémentaire, et **en ce que** le deuxième coulisseau (36) comporte au moins deux faces de guidage verticales parallèles (55) par rapport à un plan vertical du premier coulisséau (36), et qui sont guidées en coulissement entre des branches (44) du premier coulisseau (36) de forme complémentaire.

7. Système selon l'une quelconque des revendications précédentes, **caractérisé en ce que** les organes de verrouillage (52) comportent des lumières en arc de cercle (64) non centrées autour de leur axe d'articulation (50), qui déterminent une course verticale de la tige (62), portée par le deuxième coulisseau (56) et reçue dans les lumières (64), de sorte que la course de la tige (62) est égale à la course du deuxième coulisseau (56).

8. Système selon l'une quelconque des revendications précédentes, **caractérisé en que** les organes de verrouillage (52) sont des peignes (53) dont des parties actives (94) sont reçues entre des dents (17) transversales d'une crémaillère (19) longitudinale portées par des faces intérieures (21) des ailes supérieures (30) de la glissière (16).

9. Système selon l'une quelconque des revendications 1 à 7, **caractérisé en ce que** les organes (53) de verrouillage sont des peignes est la glissière comporte une crémaillère (19) réalisée par des plaques (112), évidées à intervalles réguliers et de forme complémentaire de crochets (114) portés par les parties actives (94) des peignes pour resserrer transversalement vers l'intérieur les parois latérales (32) de la glissière (16) lorsque le pied (14) est soumis à un effort d'arrachement.

10. Système selon l'une quelconque des revendications précédentes, **caractérisé en ce que** le pied (14) peut glisser sur les ailes supérieures (30) de la glissière (16) en s'appuyant par l'intermédiaire de deux patins symétriques (28) portés par le pied (14), et réalisés en matériau à faible coefficient de frottement.

## Patentansprüche

1. System (10) zur Einstellung der longitudinalen Position, und der Blockierung in eingestellter Position eines Teilsystems, auf einer Struktur eines Fahrerraums eines Kraftfahrzeugs, das mindestens mit einer Gleitschiene (16) ausgerüstet ist, die in longitudinalem Gleiten mindestens ein System aufnimmt zur Führung der longitudinalen Bewegungen und der longitudinalen und vertikalen Verriegelung in eingestellter Position eines Fußes (14) des Teilsystems, dessen in der Gleitschiene (16) aufgenommenes Ende mit einem gesteuerten mobilen ausdehnbaren Mechanismus ausgestattet ist, zwischen
einer ersten Endposition, genannt des Eingriffs oder des vertikalen Auslösens, in welcher zwei Mittel (52) zur Verriegelung des dehnbaren Mechanismus mit symmetrischer Wirkung und entgegengesetzt im Verhältnis zu einer vertikalen Mittelebene (P) der Gleitschiene (16) in einer zum Inneren versenkten Position sind, in welcher ihre transversale Blokkierung die vertikale Einführung oder das Ausziehen des Mechanismus durch einen longitudinalen Mittelschlitz der Gleitschiene (16) hindurch erlaubt, der durch zwei obere longitudinale und parallel zur Gleitschiene (16) befindliche Flügel (30) abgegrenzt wird; und
einer zweiten Endposition, genannt der Verriegelung, in welcher sich jedes der zwei Mittel (52) transversal im Blick auf die zwei inneren Seiten (21) der oberen Flügel (30) der Gleitschiene (16), mit welchen sie durch Anhängen zusammenwirken, um den Fuß (14) longitudinal und vertikal unbeweglich im Verhältnis zu der Gleitschiene (16) zu machen;
dabei mindestens eine Zwischenposition passierend, genannt der Einstellung, in welcher die zwei Mittel (52) sich jedes transversal mit Blick auf die zwei inneren Seiten (21) der oberen Ränder der Gleitschiene erstrecken, um den Fuß (14) vertikal zurück zu halten, im Verhältnis zu der Gleitschiene (16) und longitudinale Bewegungen des Fußes (14) im Inneren der Gleitschiene (16) zu ermöglichen,
und von dem Typ, in welchem die zwei Mittel (52) zur Verriegelung des Mechanismus gelagert um eine longitudinale Achse (50) montiert sind, auf einem Schlitten (36), vertikal beweglich im Verhältnis zu dem Fuß (14) montiert, um die Mittel (52) vertikal zu bewegen, und gesteuert werden, um ihre transversale Blockierung zu modifizieren durch die vertikale Bewegung eines zweiten Schlittens (56), der im Verhältnis zu dem ersten Schlitten (36) vertikal beweglich montiert ist und der mit einem Stift (62) verbunden ist, in longitudinaler Richtung (L), welcher in den Öffnungen (64) zur Steuerung der Mittel (52) aufgenommen wird, die ausgebildet sind, um, indem sie sich der longitudinalen Achse (50) zur Lagerung der Mittel vertikal nähern oder sich von ihr entfernen, deren Drehung in beide Richtungen zu bewirken,
**dadurch gekennzeichnet, dass** die vertikalen Bewegungen der beiden Schlitten (36, 56) gesteuert werden durch die Drehung einer Steuerwelle (74) von transversaler (T) Orientierung, die durch den Fuß (14) getragen wird, welcher eine erste (78) und eine zweite (76) Nocke von geeigneter Form trägt und in Drehung antreibt, welche in Auflage auf eine Auflageplatte (42) und eine transversale Platte (68) zusammenwirken, die jeweils verbunden sind mit dem ersten (36) und dem zweiten (56) Schlitten.

2. System gemäß Anspruch 1, **dadurch gekennzeichnet, dass** der zweite Schlitten (56) elastisch zu einer gegenüber dem ersten Schlitten (36) niedereren Position zurückgezogen wird.

3. System gemäß Anspruch 2, **dadurch gekennzeichnet, dass** der Fuß (14) mindestens ein Lager (72) aufweist, das die Steuerwelle (74) aufnimmt, die sich entlang einer im Verhältnis zu dem Schlitten (16) transversalen Achse (T) erstreckt und die imstande ist, drei bestimmte, in einem bestimmten Sinn aufeinanderfolgende Winkelpositionen einzunehmen.

4. System gemäß Anspruch 3, **dadurch gekennzeichnet, dass** die zwei ersten Winkelpositionen zwei Endpositionen (P₇₈, M₇₈) der ersten Nocke (78) entsprechen gemäß einer Anhebung der Nocke nach oben und einer Absenkung der Nocke nach unten, und dadurch, dass die dritte Winkelposition einer Endposition (P₇₆) der zweiten Nocke (76) entspricht gemäß einer Anhebung der Nocke nach oben, derart, dass:
die erste Nocke (78) auf der Auflageplatte (42) des ersten Schlittens (36) aufliegt gemäß der ersten Winkelposition der Welle, entsprechend einer Auflage auf einem oberen Bereich (84) der Auflageplatte, die mit dem ersten Schlitten (36) verbunden ist, und entsprechend einer oberen Position des ersten Schlittens (36), welche die longitudinale und vertikale Blockierung des Systems (10) in der Gleitschiene (16) erlaubt;
die erste Nocke (78) auf der Auflageplatte (42) des ersten Schlittens (36) aufliegt gemäß der zweiten Winkelposition der Welle (74), entsprechend einer Auflage auf einem unteren Bereich (86) der Auflageplatte (42), die mit dem ersten Schlitten (36) verbunden ist, und entsprechend einer niederen Position des ersten Schlittens (36), welche die longitudinale Einstellung des Systems (10) in der Gleitschiene (16) erlaubt, und
die zweite Nocke (76) auf der transversalen Platte (68) des zweiten Schlittens (56) aufliegt gemäß der dritten Winkelposition der Welle (74), entsprechend einer oberen Position des zweiten Schlittens (56) im Verhältnis zu dem ersten Schlitten (36), um die transversale Versenkung der Mittel (52) zu erlauben, wobei der erste Schlitten (36) in niederer Position ist.

5. System gemäß Anspruch 4, **dadurch gekennzeichnet, dass** es einen dritten Schlitten (93) aufweist, im Verhältnis zu dem Fuß (14) vertikal beweglich montiert, welcher eine transversale untere Befestigungsklaue (98) aufweist, welche mit dem Schlitten (16) zusammenwirkt, unter der Wirkung einer Rückholfeder (96), der den Schlitten (16) elastisch nach unten zurückholt, wenn der Fuß (14) den Schlitten (16) verlässt, einen komplementären Vorsprung (108), der durch den dritten Schlitten in Kontakt mit einer Aussparung (110) der Welle gebracht wird, um die Steuerwelle (74) in der dritten Winkelposition zu blockieren, die der transversalen Versenkung der Mittel (52) entspricht.

6. System gemäß einem der vorhergehenden Ansprüche, **dadurch gekennzeichnet, dass** der erste Schlitten (36) mindestens zwei im Verhältnis zu einer vertikalen Ebene des Fußes (14) vertikale parallele Führungsseiten (43) aufweist, die gleitend in ein Gehäuse (20) des Fußes (18) von komplementärer Form geführt werden, und dadurch, dass der zweite Schlitten (36) mindestens zwei im Verhältnis zu einer vertikalen Ebene des ersten Schlittens (36) vertikale parallele Führungsseiten (55) aufweist, und die gleitend zwischen Schenkeln (44) des ersten Schlittens (36) von komplementärer Form geführt werden.

7. System gemäß einem der vorhergehenden Ansprüche, **dadurch gekennzeichnet, dass** die Verriegelungsmittel (52) Öffnungen in Form von Kreisbogen (64), die nicht um ihre Lagerungsachse (50) zentriert sind, aufweisen, die einen vertikalen Lauf des Stifts (62) bestimmen, der durch den zweiten Schlitten (56) getragen wird und in den Öffnungen (64) aufgenommen wird, derart, dass der Lauf des Stifts (62) gleich dem Lauf des zweiten Schlittens (56) ist.

8. System gemäß einem der vorhergehenden Ansprüche, **dadurch gekennzeichnet, dass** die Verriegelungsmittel (52) Kämme (53) sind, deren aktive Bereiche (94) zwischen transversalen Zähnen (17) einer longitudinalen Zahnstange (19) aufgenommen werden, die durch die inneren Seiten (21) der oberen Flügel (30) des Schlittens (16) getragen werden.

9. System gemäß einem der Ansprüche 1 bis 7, **dadurch gekennzeichnet, dass** die Mittel (53) zur Verriegelung Kämme sind und der Schlitten eine Zahnstange (19) aufweist, die durch Platten (112) verwirklicht ist, die in regelmäßigen Intervallen durchbrochen sind und in komplementärer Form von Haken (114), die durch die aktiven Bereiche (94) der Kämme getragen werden, um transversal zum Inneren hin die lateralen Wände (32) des Schlittens (16) wieder anzuziehen, wenn der Fuß (14) einer Zugbelastung ausgesetzt ist.

10. System gemäß einem der vorhergehenden Ansprüche, **dadurch gekennzeichnet, dass** der Fuß (14) auf den oberen Flügeln (30) des Schlittens (16) gleiten kann, indem er über zwei symmetrische Kufen (28) aufliegt, die von dem Fuß getragen werden und aus einem Material mit niedrigem Reibungskoeffizienten hergestellt sind.

## Claims

1. System (10) for adjusting the longitudinal position of a sub-assembly and locking it in the adjusted position on an automotive vehicle passenger compartment structure equipped with at least one slide rail (16) that longitudinally slidably holds at least one system for guiding the longitudinal movement of and longitudinally and vertically locking in the adjusted position a leg (14) of the sub-assembly, on which the end held by the slide rail (16) is fitted with an expandable mobile mechanism that can be adjusted between
. a first extreme position, known as the vertical engagement or disengagement position, in which two units (52) for locking the expandable mechanism, with symmetrical and opposite action relative to a vertical mid-plane (P) of the slide rail (16), are in an inwardly retracted position in which their transverse footprint allows for the vertical insertion or removal of the mechanism through a median longitudinal elongated hole in the slide rail (16) delimited by two parallel upper longitudinal flanges (30) of the slide rail (16); and
. a second extreme position, known as the locked position, in which the two units (52) each extend transversely opposite two inner surfaces (21) of the upper flanges (30) of the slide rail (16), with which they cooperate by meshing, to longitudinally and vertically immobilize the leg (14) relative to the slide rail (16);
. through at least one intermediate position, known as the adjustment position, in which the two units (52) each extend transversely opposite the two inner surfaces (21) of the upper flanges (30) of the slide rail, to vertically hold the leg (14) relative to the slide rail (16) and allow for longitudinal movements of the leg (14) inside the slide rail (16), of the type in which the two mechanism locking units (52) are mounted hinged around a longitudinal rod (50) on a first slider (36) mounted vertically mobile relative to the leg (14) to move the units (52) vertically, and are controlled to adjust their transverse footprint by the vertical movement of a second slider (56) that is mounted vertically mobile relative to the first slider (36) and is connected to a pin (62) with longitudinal orientation (L) held in slots (64) to control the hinged units (52) by causing them to pivot in either direction by moving vertically closer to or away from the longitudinal hinge rod (50) of the units,
**characterized in that** the vertical movements of the two sliders (36, 56) are controlled by the rotation of a control shaft (74) with transverse orientation (T), held by the leg (14), which holds and rotatably drives appropriately shaped first (78) and second (76) cams, which cooperate resting on a bearing plate (42) and a transverse plate (68) which are respectively connected to the first (36) and the second (56) sliders.

2. System according to claim 1, **characterized in that** the second slider (56) is returned elastically to a lowered position relative to the first slider (36).

3. System according to claim 2, **characterized in that** the leg (14) has at least one bearing (72) accommodating the control shaft (74) which extends along a transverse axis (T) relative to the slide rail (16) and which is able to occupy three consecutive determined angular positions in a determined direction.

4. System according to claim 3, **characterized in that** the first two angular positions correspond to two extreme positions (P ₇₈, M ₇₈) of the first cam (78) along an upwards play of the cam and a downwards play of the cam, and the third angular position corresponds to an extreme position (P ₇₆) of the second cam (76) along an upwards play of the cam, such that:
. the first cam (78) is resting on the bearing plate (42) of the first slider (36) in the first angular position of the shaft, which corresponds to resting on an upper part (84) of the bearing plate connected to the first slider (36), and to a raised position of the first slider (36) allowing for the longitudinal and vertical locking of the system (10) in the slide rail (16);
. the first cam (78) is resting on the bearing plate (42) of the first slider (36) in the second angular position of the shaft (74), which corresponds to resting on a lower part (86) of the bearing plate (42) connected to the first slider (36), and to a lowered position of the first slider (36) allowing for the longitudinal adjustment of the system (10) in the slide rail (16); and
- the second cam (76) is resting beneath the transverse plate (68) of the second slider (56) in the third angular position of the shaft (74), which corresponds to a raised position of the second slider (56) relative to the first slider (36) to allow for the transverse retraction of the units (52), the first slider (36) being in the lowered position.

5. System according to claim 4, **characterized in that** it comprises a third slider (93), mounted vertically mobile relative to the leg (14), which comprises a lower transverse foot (98) that works in conjunction with the slide rail (16), against the action of a spring (96) which, when the leg (14) leaves the slide rail (16), elastically returns downwards a complementary stub (108) on the third slider into contact with a notch (110) in the shaft to lock the control shaft (74) in the third angular position, which corresponds to the transverse retraction of the units (52);

6. System according to any one of the previous claims, **characterized in that** the first slider (36) comprises at least two vertical guiding surfaces (43) that are parallel relative to a vertical plane of the leg (14) and are slidably guided in a case (20) for the leg (18) with a complementary shape, and the second slider (36) comprises at least two vertical guiding surfaces (55) that are parallel (55) relative to a vertical plane of the first slider (36) and are slidably guided between arms (44) of the first slider (36) with a complementary shape.

7. System according to any one of the previous claims, **characterized in that** the locking units (52) comprise arced slots (64) not centred around their hinge rod (50), which determine the vertical travel of the pin (62) carried by the second slider (56) and held in the slots (64) so that the travel of the pin (62) is equal to the travel of the second slider (56).

8. System according to any one of the previous claims, **characterized in that** the locking units (52) are combs (53) the active parts (94) of which are held between transverse teeth (17) on a longitudinal rack (19) on the inner surfaces (21) of the upper flanges (30) of the slide rail (16).

9. System according to any one of claims 1 to 7, **characterized in that** the locking units (53) are combs and the slide rail has a rack (19) made from plates (112) recessed at regular intervals that are a complementary shape to hooks (114) on the active parts (94) of the combs to transversely contract the side walls (32) of the slide rail (16) inwards when the leg (14) is subject to an uplift force.

10. System according to any one of the previous claims, **characterized in that** the leg (14) can slide rail on the upper flanges (30) of the slide rail (16) supported by means of two symmetrical pads (28) attached to the leg (14) and made of a material with a low friction coefficient.
